# EUROPÄISCHE PATENTSCHRIFT

(11) **EP 3 169 502 B1**
(45) Veröffentlichungstag und Bekanntmachung des Hinweises auf die Patenterteilung: **21.08.2019**
(21) Anmeldenummer: 15738026.2
(22) Anmeldetag: 09.07.2015
(51) Int. Cl.: B29C 45/16, B29C 45/14, B29L 31/30

(54) **VERFAHREN ZUR HERSTELLUNG EINES KUNSTSTOFF-FAHRZEUGANBAUTEILS**
METHOD FOR PRODUCING A PLASTIC VEHICLE PART
PROCÉDÉ DE FABRICATION D'UNE PIÈCE RAPPORTÉE DE VÉHICULE EN MATIÈRE PLASTIQUE

(30) Priorität: 17.07.2014 EP 14177427
(43) Veröffentlichungstag der Anmeldung: 24.05.2017
(73) Patentinhaber: Saint-Gobain Glass France, 92400 Courbevoie (FR)
(72) Erfinder: BENYAHIA, Rym, 70188 Stuttgart (DE); LUX, Thomas, 71554 Weissach im Tal (DE); TURAN, Ahmet, 71573 Allmersbach im Tal (DE); FOURNIER, Nicolas, 71636 Ludwigsburg (DE)
(74) Vertreter: Gebauer, Dieter Edmund
(86) Internationale Anmeldenummer: PCT/EP2015/065660
(87) Internationale Veröffentlichungsnummer: WO 2016/008790

(56) Entgegenhaltungen:
- EP-A1- 0 415 716
- EP-A1- 1 190 831
- EP-A1- 1 743 756
- DE-A1-102008 023 499
- DE-A1-102012 014 659
- US-A1- 2010 080 970
- HOPMANN C ET AL: "Automobilscheiben aus Kunststoff", KUNSTOFFE, CARL HANSER VERLAG, MUNCHEN, DE, Nr. 2/05, 1. Februar 2005 (2005-02-01), Seiten 22-27, XP002396333, ISSN: 0023-5563

## Beschreibung

Die Erfindung umfasst ein Verfahren zur Herstellung eines Kunststoff-Fahrzeuganbauteils, ein Kunststoff-Fahrzeuganbauteil und dessen Verwendung.

Im Zuge immer strengerer Vorgaben zur Kohlendioxidemission von Kraftfahrzeugen gibt es zudem starke Bestrebungen, das Gewicht eines Fahrzeugs und damit dessen Treibstoffverbrauch zu senken. Stetige Weiterentwicklungen im Bereich der Kunststoffe ermöglichen den Ersatz von großen Teilen der Metallkarosserie durch entsprechend leichtere Elemente aus polymeren Werkstoffen. Insbesondere Teile oder auch der gesamte Fensterbereich können durch Elemente aus polymeren Werkstoffen ersetzt werden. Diese zeigen in vielen Fällen bei einem deutlich niedrigeren Gewicht eine vergleichbare Härte, Stabilität und Belastbarkeit wie bei einem Karosseriefenster aus Stahl. Zusätzlich wird auf Grund der Gewichtsreduzierung der Schwerpunkt des Fahrzeugs weiter nach unten verlagert, was einen positiven Einfluss auf das Fahrverhalten hat. Zudem können polymere Werkstoffe im Vergleich zu Metallen bei deutlich niedrigeren Temperaturen hergestellt, bearbeitet und verformt werden. Dies senkt den Energiebedarf und die Kosten bei der Herstellung der Werkstoffe.

Formteile aus polymeren Werkstoffen können dabei in praktisch jeder gewünschten Form und Geometrie hergestellt werden. Spezielle Hochleistungskunststoffe wie beispielsweise Aramide oder Kevlar weisen sehr hohe Festigkeiten und Stabilitäten auf.

Viele Werkstoffteile aus Kunststoffen müssen verschiedenen Anforderungen und Funktionen gerecht werden. Wichtige Parameter sind hierbei die Stabilität, Bruchverhalten, Kratzfestigkeit, Schlagzähigkeit oder Kerbschlagzähigkeit. Neben technischen Gesichtspunkten wie Gewicht und Festigkeit der einzelnen Bauteile spielen auch die Form, Geometrie und das Aussehen eine zunehmend wichtigere Rolle. Vor allem in der Automobilindustrie sind neben mechanischen Eigenschaften auch Merkmale im Bereich des Designs und der Ästhetik von großer Bedeutung.

Um verschiedene Merkmale in polymeren Werkstoffen zu vereinen, werden diese aus unterschiedlich geformten und aus unterschiedlich beschaffenen Grundmaterialien zusammengesetzt. Etablierte Verfahren zur Herstellung dieser Werkstoffe umfassen Zwei- oder Mehrkomponenten-Spritzgussverfahren. Auf diese Weise ist es möglich, Merkmale wie beispielsweise Witterungsbeständigkeit, Oberflächenglanz und Bruchbeständigkeit oder Torsionsstabilität miteinander zu vereinen. Zudem können die Anteile sehr teurer Werkstoffe reduziert werden.

DE 197 22 551 A1 offenbart ein Verfahren zur Herstellung von Kunststoffteilen im Zwei-Komponenten-Spritzgussverfahren, wobei eine der Schichten aus einem durchgefärbten Kunststoff besteht.

EP 1 743 756 A1 offenbart ein Verfahren zur Herstellung eines Bauteils über ein Spritzgussverfahren, bei dem in einem ersten Schritt zwischen eine zwei Folien ein thermoplastischer Kunststoff eingespritzt wird. In einem zweiten Schritt wird das so hergestellte erste Formteil mit einem zweiten Formteil verbunden, indem das erste Formteil mit einem zweiten thermoplastischen Kunststoff hinterspritzt wird. Die Herstellung eines solchen Bauteils ist relativ aufwändig.

EP 1 190 831 A1 offenbart ein Verfahren zur Herstellung einer Fahrzeugscheibe aus einem Kunststoff in einem Spritzgießprozess. An die Fahrzeugscheibe ist eine A-, B-C- oder D-Säulen-Blende als zweite Komponente angespritzt. Die Säulen-Blende kann dekorativ eingefärbt sein.

Die Veröffentlichung "Automobilscheiben aus Kunststoff' von C. Hopmann et al. (Kunststoffe, Carl Hanser Verlag, München, Nr. 2/05, 1.02.2005, Seiten 22-27, XP002396333, ISSN: 0023-5563) offenbart Verfahren zur Herstellung von Kunststoffautoscheiben und die Verwendung von Lacken zur Beschichtung von Kunststoffscheiben. Des Weiteren offenbart der Artikel, dass zu Schutzzwecken eine Folie auf einer Polycarbonat-Scheibe aufgebracht werden kann.

EP 0 415 716 A1 offenbart eine Kunststoffautoscheibe, die mit einer Schutzbeschichtung versehen ist und ein Rahmenteil aufweist. Diese Scheibe wird in einem Spritzgussverfahren hergestellt.

DE 10 2008 023 499 A1 offenbart einen Drucklack und ein Verfahren zur Herstellung eines bedruckten Schichtstoffs.

Eine etablierte Methode zur Erzeugung optischer Effekte ist das Verfahren zur Folienhinterspritzung (FIM/ film insert molding). In diesem Verfahren wird eine entsprechende Folie in das Spritzgießwerkzeug eingelegt und mit einem geeigneten Kunststoff hinterspritzt. Auf diese Weise lassen sich die Oberflächeneigenschaften und Geometrie von polymeren Werkstoffen gezielt und vielseitig beeinflussen und modifizieren. Eine wichtige Voraussetzung für die Anwendung des Verfahrens der Folienhinterspritzung sind temperaturstabile Folien. Zudem müssen auf der Folie befindliche Aufdrucke soweit temperaturbeständig sein, dass sie die Hinterspritzung mit einem flüssigen Polymer wie Polycarbonat überstehen. Da die Folie auf der Außenseite des Werkstücks positioniert ist, ist sie vor äußeren mechanischen und chemischen Einflüssen nicht geschützt. Dies kann auf Dauer zu einer Beschädigung der Folie und des auf der Folie enthaltenen Aufdrucks führen.

Kunststoffscheiben für Fahrzeuge werden typischerweise im Mehrkomponenten-Spritzgussverfahren hergestellt. Oft enthalten diese Scheiben im Randbereich eine dunkel eingefärbte, meist schwarze, opake Komponente auf einer transparenten Komponente, wobei diejenige Seite der Scheibe, welche die opake Materialphase aufweist, stets dem Fahrzeuginnenraum zugewandt ist. Im Bereich der opaken Komponente kann die Scheibe für den Betrachter unsichtbar mit der Fahrzeugkarosserie verbunden, beispielsweise verklebt sein. Im Gegensatz zu herkömmlicher Fahrzeugverglasung aus Mineralglas sind diese opaken Randbereiche bei Kunststoffscheiben häufig großflächiger und aufwändiger ausgestaltet. In diesen Bereichen der Scheibe ergibt sich dadurch die Möglichkeit, optische Zierelemente und Dekors in die Scheibe einzubringen.

Die Erfindung hat die Aufgabe, ein Verfahren zur Herstellung eines Kunststoff-Fahrzeuganbauteils mit einem Aufdruck bereitzustellen, der vor äußeren Einflüssen geschützt ist.

Die Aufgabe der Erfindung wird durch ein Verfahren gemäß Anspruch 1 gelöst. Bevorzugte Ausführungen gehen aus den Unteransprüchen hervor.

Ein erfindungsgemäßes Kunststoff-Fahrzeuganbauteil und die Verwendung eines Kunststoff-Fahrzeuganbauteils gehen aus weiteren unabhängigen Ansprüchen hervor. Bevorzugte Ausführungen gehen aus den Unteransprüchen hervor.

Das erfindungsgemäße Verfahren zur Herstellung eines Kunststoff-Fahrzeuganbauteils umfasst einen ersten Schritt, in dem eine polymere Folie in ein Spritzgusswerkzeug eingelegt wird. Der Begriff "Folie" schließt im Sinne der Erfindung sowohl homogene, ein- oder mehrkomponentige Folien, wie auch aus unterschiedlichen oder gleichen Materialien gewobene, geflochtene oder geschichtete Mehrkomponenten-Folien oder Textilien mit ein. Die polymere Folie wird bevorzugt über elektrostatische Wechselwirkungen auf der Stahloberfläche des Spritzgusswerkzeugs fixiert. Die elektrostatische Aufladung wird bevorzugt über Aufladeelektroden, welche von Aufladegeneratoren mit Hochspannung gespeist werden, berührungsfrei auf die polymere Folie übertragen. Alternativ kann die polymere Folie mechanisch oder über Vakuumansaugung im Spritzgusswerkzeug fixiert werden. Die polymere Folie weist einen opaken oder teilopaken Aufdruck oder eine Farbpigmentierung auf. Der Aufdruck ist bevorzugt bei einer Temperatur von mindestens 250 °C, bevorzugt mindestens 320 °C zersetzungsstabil. Der Ausdruck "teilopaker Aufdruck" umfasst im Sinne der Erfindung auch farbige Aufdrucke und Drucke in Graustufen. Der opake Aufdruck enthält bevorzugt eine Druckfarbe mit temperaturstabilen organischen Pigmenten, beispielsweise Urethan-Acrylat Polymere, Kohlenstoff, Azofarbstoffe oder polycyclische Verbindungen. Alternativ können anorganische Pigmente wie Titandioxid, Ruß, Zinnober, Bismut- (Bismutvanadat), Spinellpigmente, Blei-, Quecksilber-, Zirkon-, Eisen-, Cadmium-, Kupfer-, Kobalt-, Nickel-, Chrompigmente; Aluminiumsilikate (Ultramarin), enthalten sein. Aufgrund der höheren Temperaturstabilität werden bevorzugt anorganische Pigmente verwendet. In einer alternativen Ausgestaltungsform können die Farbpigmente auch homogen in die polymere Folie eingearbeitet sein. Dies kann beispielsweise durch Beimischung der Farbpigmente zu einem Granulat der polymeren Folie mit anschließender Extrusion der resultierenden Mischung erfolgen. In einer weiteren optionalen Möglichkeit können die Farbpigmente in einer Lösung auf die polymere Folie aufgesprüht werden.

Im zweiten Schritt des erfindungsgemäßen Verfahrens wird die polymere Folie mit einer transparenten polymeren Materialphase hinterspritzt, welche das Deckteil des Kunststoff-Fahrzeuganbauteils bildet. Das flüssige Ausgangsmaterial des polymeren Deckteils wird dabei an die polymere Folie im Spritzgusswerkzeug gespritzt und es wird auf diese Weise ein stoffschlüssiger Verbund zwischen polymerer Folie und Deckteil erzielt. Das polymere Deckteil wird optisch transparent ausgebildet. Die optische Transparenz verleiht dem polymeren Deckteil ein glasähnliches Aussehen bei nur geringem Eigengewicht und einer hohen Verformbarkeit. Transparent bedeutet im Sinne der Erfindung, dass ein Betrachter durch die Komponente hindurchblicken kann und Objekte, die sich vom Betrachter aus gesehen hinter der Komponente befinden, erkennen kann. Die transparente Komponente kann farblos sein. Die transparente Komponente kann auch gefärbt oder getönt sein. Der Transmissionsgrad des transparenten polymeren Deckteils im sichtbaren Spektralbereich (300 nm - 800 nm) liegt dabei bei mindestens 10 %.

In einem dritten Schritt wird ein polymeres Trägerteil auf den Aufbau aus polymerer Folie und polymerem Deckteil aufgespritzt. Das polymere Trägerteil wird dabei auf der Seite des polymeren Deckteils aufgespritzt, auf der keine polymere Folie aufgebracht ist, das heißt die Materialabfolge ist: polymere Folie - polymeres Deckteil - polymeres Trägerteil. Das polymere Trägerteil sorgt für die Stabilität des Kunststoff-Fahrzeuganbauteils und beinhaltet polymere Materialien mit einer möglichst hohen Festigkeit, Steifigkeit, Schlagzähigkeit oder Kerbschlagzähigkeit und geringer Bruchneigung.

Als erste freiliegende Fläche des Kunststoff-Fahrzeuganbauteils ist die Fläche definiert, die aus polymerer Folie und polymerem Deckteil gebildet wird, d.h. die Fläche auf der der Aufdruck sichtbar ist. Als freiliegende Flächen werden die Flächen des Fahrzeuganbauteils bezeichnet, die nach der Herstellung des aus polymerem Deckteil, polymeren Trägerteil und polymerer Folie bestehenden Bauteils an der Außenseite des Bauteils liegen. Diese Flächen können im weiteren Verfahren beschichtet werden. Als zweite freiliegende Fläche des Kunststoff-Fahrzeuganbauteils ist die Fläche definiert, die der ersten Fläche gegenüberliegt, d.h. die Fläche, die mindestens durch das polymere opak ausgeführte Trägerteil gebildet wird. Unter freiliegenden Seitenflächen werden die Kantenflächen des Bauteils verstanden, die die einzelnen Materialschichten des polymeren Deckteils und des polymeren Trägerteils umfassen.

Das polymere Trägerteil kann über die gesamte Fläche des polymeren Deckteils gespritzt werden, wie zum Beispiel für eine Säulenabdeckung oder eine Türenverkleidung. In dem Fall wird die zweite freiliegende Fläche durch das polymere Trägerteil gebildet. Das polymere Trägerteil kann auch nur in einem Teilbereich des polymeren Deckteils angeordnet sein, wie zum Beispiel im Fall einer Kunststofffahrzeugscheibe, die einen schwarzen Bereich im Randbereich der Scheibe aufweist, der vom polymeren Trägerteil gebildet wird. In dem Fall wird die zweite freiliegende Fläche vom polymeren Trägerteil und dem polymeren Deckteil gebildet.

In einem weiteren Schritt wird eine Schutzbeschichtung (Hardcoat) auf das Fahrzeuganbauteil aufgebracht. Die Schutzbeschichtung wird zumindest auf der polymeren Folie aufgebracht, um die Folie und den enthaltenen Aufdruck zu schützen. Die Schutzbeschichtung wird bevorzugt rundum, das heißt auf allen freiliegenden Flächen inklusive Seitenflächen des Fahrzeuganbauteils angebracht. Bevorzugt werden thermisch härtende oder UV-härtende Lacksysteme auf Basis von Polysiloxanen, Polyacrylaten, Polymethacrylaten und / oder Polyurethanen verwendet. Die Schutzbeschichtung kann eine oder mehrere separat aufgebrachte Schichten aufweisen und hat bevorzugt eine Gesamtschichtdicke von 1 µm bis 50 µm, besonders bevorzugt von 2 µm bis 25 µm. Der besondere Vorteil liegt in der Kratzbeständigkeit und Witterungsbeständigkeit sowie der chemischen Resistenz des polymeren Werkstücks durch die Schutzbeschichtung. Die Schutzbeschichtung kann auch UV-Blocker, Konservierungsstoffe sowie Komponenten zur Erhöhung der Kratzfestigkeit, beispielsweise Nanopartikel enthalten. Zusätzlich kann die Schutzbeschichtung auch noch dekorative Funktionen, wie Glanz- oder Perleffekte wahrnehmen. Die Schutzbeschichtung kann beispielsweise durch ein Tauch-, Flut-, oder Sprühverfahren oder ein In-Mould-Coating-Verfahren auf das polymere Werkstück aufgebracht werden. Die Schutzbeschichtung wird nach dem Aufbringen bevorzugt über Temperatur und / oder UV-Licht-Eintrag ausgehärtet.

In einem abschließenden, optionalen Schritt kann das Fahrzeuganbauteil mit einer Weichkomponente umspritzt oder teilumspritzt werden. Die Weichkomponente weist bevorzugt thermoplastische Elastomere (TPE, TPV), thermoplastische Olefine (TPO), thermoplastische Polyurethane (TPU), Polyvinylchlorid (PVC), thermoplastische Polyesterpolymere (TPC) oder Styrol-Blockcopolymere (TPS) auf und kann beliebig eingefärbt sein.

Es wird somit ein verbessertes Kunststoff-Fahrzeuganbauteil bereitgestellt, das einen Aufdruck enthält, der vor äußeren Einflüssen geschützt ist und deutlich sichtbar ist. Gleichzeitig wird durch das transparente Deckteil ein glasartiger Effekt erzeugt, sodass das Fahrzeuganbauteil nicht nur für Innen- und Außenanbauteile im Bereich von Verkleidungen, wie zum Beispiel als Säulenabdeckung der B- oder C-Säule, geeignet ist, sondern auch als getönte Scheibe eingesetzt werden kann. Durch die Anordnung der bedruckten Folie auf dem transparenten Deckteil wird verhindert, dass bei Vorhandensein einer dunklen Einfärbung der transparenten Phase, die Farbe des Aufdrucks verfälscht wird. Bei Einsatz des Fahrzeuganbauteils als getönte Scheibe (z.B. bei Privacy-Verglasung) hat diese Anordnung den Vorteil, dass der Aufdruck deutlich sichtbar ist und - im Gegensatz zu einer Anordnung unter dem transparenten Deckteil - ohne Farbänderungen deutlich wahrnehmbar ist.

Das Kunststoff-Fahrzeuganbauteil wird bevorzugt im Mehrkomponenten-Spritzguss- oder im Mehrkomponenten-Spritzprägeverfahren, besonders bevorzugt in Kombination mit Wendeplattentechnologie, Drehteller- und/oder Indexplattentechnologie hergestellt. Alternativ kann das Kunststoff-Fahrzeuganbauteil auch alleine über Wendeplattentechnologie, Drehteller- und/oder Indexplattentechnologie hergestellt werden.

Das polymere Trägerteil enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol - Polycarbonat (ABS/PC), PET/PC, PBT/PC und/oder Copolymere oder Gemische davon.

Das polymere Trägerteil wird bevorzugt opak ausgebildet. Dadurch wird der Kontrast des auf der polymeren Folie enthaltenen Aufdrucks verbessert verglichen mit einer transparenten Ausführung des Trägerteils. Opak bedeutet im Sinne der Erfindung, dass ein Betrachter nicht durch die Komponente hindurchblicken kann. Die Transmission des opaken Trägerteils im sichtbaren Spektralbereich ist also deutlich herabgesetzt und beträgt kleiner 10 %, bevorzugt kleiner oder gleich 5 %, insbesondere etwa 0%.

Das polymere Trägerteil wird bevorzugt mit einer Dicke von 0,5 mm bis 10 mm, besonders bevorzugt 1 mm bis 5 mm spritzgegossen. Die Dicke des polymeren Trägerteils ist von den Dimensionen und Stabilitätsanforderungen des fertigen Bauteils abhängig.

Das polymere Deckteil wird bevorzugt mit einer Dicke von 1 mm bis 10 mm, bevorzugt 2 mm bis 5 mm spritzgegossen. In diesem Bereich wird ein optisch besonders ausgeprägter glasartiger Effekt erzielt.

Die polymere Folie enthält bevorzugt Polycarbonate (PC), Polymethylmethacrylat (PMMA), Polyethylenterephthalat (PET), Polybutylenterephthalat (PBT), Polycarbonat-Polybutylenterephthalat (PBT/PC), Styrol-Acrylnitril (SAN) und/oder Copolymere oder Gemische davon. Die polymere Folie enthält bevorzugt das gleiche Material wie das polymere Deckteil, da dann beim Hinterspritzen der polymeren Folie mit dem polymeren Deckteil die Folie übergangslos mit dem polymeren Deckteil verbunden wird, was optisch besonders vorteilhaft ist.

Die polymere Folie weist bevorzugt eine Dicke von 0,1 mm bis 3 mm, bevorzugt 0,12 mm bis 1 mm auf. Die Flächenausdehnung der polymeren Folie kann in Abhängigkeit von dem anzubringenden Aufdruck und von der Dimensionierung des polymeren Trägerteils und des polymeren Deckteils variieren. Erfindungsgemäß erstreckt sich die Folie nur über einen Teilbereich der ersten freiliegenden Fläche, sodass ein Randbereich frei von der polymeren Folie bleibt. Bevorzugt erstreckt sich die Folie über einen Bereich von 2% bis 80%, bevorzugt 3% bis 30%, besonders bevorzugt 5% bis 15% der gesamten Fläche des polymeren Deckteils. Eine Folie, die sich nur über einen Teilbereich des polymeren Deckteils erstreckt, hat den Vorteil, dass diese im Spritzgusswerkzeug über Adhäsion fixiert werden kann, ohne dass zusätzliche Maßnahmen zur Fixierung erforderlich sind. Bei kleineren Folien ist die Gefahr, dass Luftbläschen beim Hinterspritzen der Folie eingeschlossen werden oder die Folie mit Spritzgussmasse unterwandert wird, minimiert. Das Fahrzeuganbauteil lässt sich somit effektiver herstellen. Die Folie kann sich besonders bevorzugt auch nur über den Bereich des Aufdrucks erstrecken.

In einer weiteren bevorzugten Ausführungsform umfasst die polymere Folie mehrere einzelne polymere Folien mit einem dekorativen Aufdruck, wobei die einzelnen polymeren Folien sich jeweils über einen Teilbereich des polymeren Deckteils erstrecken. So können über ein einfaches Verfahren komplexere zusammengesetzte dekorative Aufdrucke in das Bauteil integriert werden.

Bei Einsatz des Fahrzeuganbauteils als Fahrzeugscheibe ist der Aufdruck bevorzugt im Bereich des Trägerteils angebracht, damit die Fahrersicht durch den transparenten Scheibenbereich durch den Aufdruck nicht beeinträchtigt wird. Die polymere Folie wird bevorzugt vorgeformt, besonders bevorzugt thermisch vorgeformt. Die vorangehende Formgebung der polymeren Folie erlaubt eine bessere Anpassung an die Geometrie der Spritzgusswerkzeugkavität und des Deckteils. Dies vermeidet zudem bei der Hinterspritzung der polymeren Folie mit dem polymeren Deckteil eine Unterwanderung der polymeren Materialphase zwischen dem polymeren Deckteil und der polymeren Folie.

Die Erfindung umfasst des Weiteren ein Kunststoff-Fahrzeuganbauteil, welches mindestens ein opakes polymeres Trägerteil, ein transparentes polymeres Deckteil, eine polymere Folie und eine Schutzbeschichtung auf der polymeren Folie umfasst. Die polymere Folie ist auf dem transparenten polymeren Deckteil angeordnet, wobei die polymere Folie einen opaken oder teilopaken Aufdruck aufweist. Das polymere Trägerteil ist auf der Seite des transparenten Deckteils angebracht, die keine polymere Folie aufweist, d.h. das Trägerteil ist auf der Oberfläche des transparenten Deckteils angebracht, die der polymeren Folie gegenüberliegt. Das polymere Trägerteil sorgt für die Stabilität des Kunststoff-Fahrzeuganbauteils und beinhaltet wie oben beschrieben polymere Materialien wie Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol - Polycarbonat (ABS/PC), PET/PC, PBT/PC und/oder Copolymere oder Gemische davon.

Das polymere Trägerteil enthält bevorzugt anorganische oder organische Füllstoffe, besonders bevorzugt SiO₂, Al₂O₃, TiO₂, Tonmineralien, Silikate, Zeolithe, Glasfasern, Kohlenstofffasern, Glaskugeln, organische Fasern und/oder Gemische davon. Die Füllstoffe können die Stabilität des Trägerteils weiter erhöhen. Zudem können die Füllstoffe den Anteil an polymeren Materialien verringern und so die Herstellungskosten des Bauteils vermindern.

Das polymere Deckteil kann sowohl dekorative Funktionen als auch Funktionen im Bereich der Bauteilbeständigkeit übernehmen. Beispiele hierfür sind Oberflächen oder Beschichtungen, welche die witterungs-, UV- oder chemische Beständigkeit erhöhen. Die polymere Folie dient als Träger des opaken oder teilopaken Aufdrucks. Der Aufdruck kann auf der Seite der Folie angebracht sein, die beim Einlegen in das Spritzgusswerkzeug zum Spritzgusswerkzeug zeigt, sodass der Aufdruck im fertigen Fahrzeuganbauteil an der ersten freiliegenden Fläche des Fahrzeuganbauteils zu liegen kommt. Alternativ kann der Aufdruck auch an der Seite der Folie angebracht sein, die zum transparenten polymeren Deckteil zeigt, wodurch der Aufdruck nicht direkt äußeren Einflüssen ausgesetzt ist. Im Falle einer mehrschichtigen Folie kann der Aufdruck auch zwischen zwei einzelnen Schichten der Folie angeordnet sein, wodurch der Aufdruck im fertigen Fahrzeuganbauteil vor äußeren Einflüssen etwas geschützt ist. Der Aufdruck ist bevorzugt bei mindestens 250°C, bevorzugt 320 °C zersetzungsstabil, da sich andernfalls der Aufdruck oder die Farbpigmente beim Aufspritzen des polymeren Deckteils zersetzen oder auswaschen würde. Der opake oder teilopake Aufdruck ist bevorzugt im Bereich von 150 °C bis 350 °C, besonders bevorzugt 200 °C bis 320 °C thermisch zersetzungsstabil. Die polymere Folie ist bevorzugt ebenfalls bei mindestens 150 °C, besonders bevorzugt mindestens 320 °C zersetzungsstabil, andernfalls könnten sich Gasbläschen und Verfärbungen im Bereich der polymeren Folie im fertigen Werkstück bilden.

Die polymere Folie ist bevorzugt im Bereich von 200 °C bis 320 °C thermisch zersetzungsstabil. Geeignete Folienmaterialien sind hier vor allem Polymethylmethacrylat (PMMA) und Polycarbonat (PC). Diese polymeren Folien lassen sich mit einer Vielzahl von transparenten Polymeren überspritzen, welche das Deckteil bilden. Die polymere Folie kann in einer alternativen Ausgestaltung auch farbig, schwarz oder grau eingefärbt sein.

Die polymere Folie erstreckt sich nicht über die gesamte Fläche des polymeren Deckteils. Bevorzugt ist ein Randbereich von mindestens 0,1 cm bis 5 cm ohne die polymere Folie angeordnet. Der Randbereich ohne Folie sorgt für eine sehr gleichmäßige Randversiegelung. Zusätzlich kann der Randbereich dekorative Funktionen übernehmen.

Die Erfindung umfasst des Weiteren die Verwendung des Kunststoff-Fahrzeuganbauteils für Innen- und Außenanwendungen in Fahrzeugen, bevorzugt zur Außenanwendung. Das Kunststoff-Fahrzeuganbauteil wird bevorzugt als A-, B-, oder C-Säulenabdeckung in Kraftfahrzeugen verwendet, besonders bevorzugt als getönte Scheibe in Fahrzeugen. Die Verwendung des Kunststoff-Fahrzeuganbauteils als Kühlergrillverkleidung oder Spoiler-Element ist ebenfalls möglich.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1a:: eine schematische Ansicht eines erfindungsgemäßen Kunststoff-Fahrzeuganbauteils,
- Figur 1b:: einen Querschnitt entlang B-B' durch das erfindungsgemäße Kunststofffahrzeuganbauteil gemäß Figur 1a,
- Figur 2a:: eine schematische Aufsicht einer erfindungsgemäßen Kunststoff-Fahrzeugscheibe,
- Figur 2b:: einen Querschnitt entlang A-A' durch die erfindungsgemäße Kunststoff-Fahrzeugscheibe und
- Figur 3:: ein Fließschema des erfindungsgemäßen Verfahrens zur Herstellung eines Kunststoff-Fahrzeuganbauteils.

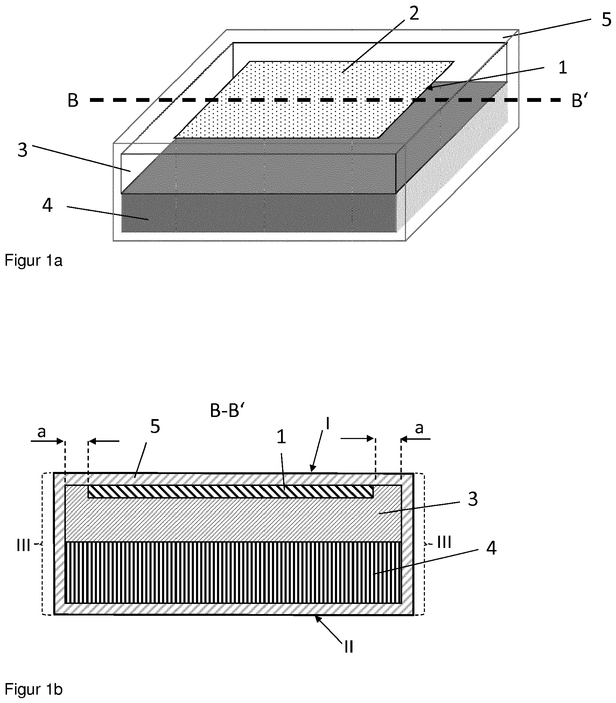

Figur 1 zeigt eine schematische Ansicht eines erfindungsgemäßen Kunststoff-Fahrzeuganbauteils, beispielsweise eine B-Säulenabdeckung eines Kraftfahrzeuges. Auf einem opaken polymeren Trägerteil 4 aus Acrylnitril-Butadien-Styrol (ABS) ist ein transparentes polymeres Deckteil 3 aus PC oder PMMA angeordnet. Das transparente polymere Deckteil 3 erzeugt einen glasartigen Effekt mit Tiefenwirkung auf der Oberfläche des opaken Trägerteils 4. Auf dem transparenten polymeren Deckteil 3 ist eine 0,5 mm dicke polymere Folie 1 mit dekorativem Aufdruck 2 angeordnet. Die polymere Folie 1 erstreckt sich nicht über die gesamte Fläche des polymeren Deckteils 3. Ein Randbereich mit einer Breite a von etwa 0,2 cm ist frei von polymerer Folie 1, wodurch eine verbesserte Randversiegelung erzielt wird. An allen freiliegenden Flächen I und II und Seitenflächen III des Kunststoff-Fahrzeuganbauteils ist eine Schutzschicht 5, zum Beispiel ein Polysiloxan-basierter Lack, angeordnet. Die Schutzschicht 5 schützt die polymere Folie 1, das polymere Deckteil 3 und das polymere Trägerteil 4 vor Beschädigung durch mechanische und chemische Einflüsse. Auch die freiliegenden Seitenflächen III sind mit einer Schutzschicht 5 bedeckt und vor äußeren Einflüssen geschützt. Im Querschnitt des erfindungsgemäßen Bauteils erkennt man, dass die polymere Folie 1 im Randbereich des Bauteils von dem Material des polymeren Deckteils 3 umgeben ist und die polymere Folie 1 in das transparente Deckteil 3 eingebettet ist. Diese stabile Fixierung der polymeren Folie 1 ohne sichtbaren Übergang zum polymeren Deckteil 3 erfolgt beim Hinterspritzen der polymeren Folie 1 mit dem heißen Material des transparenten Deckteils 3.

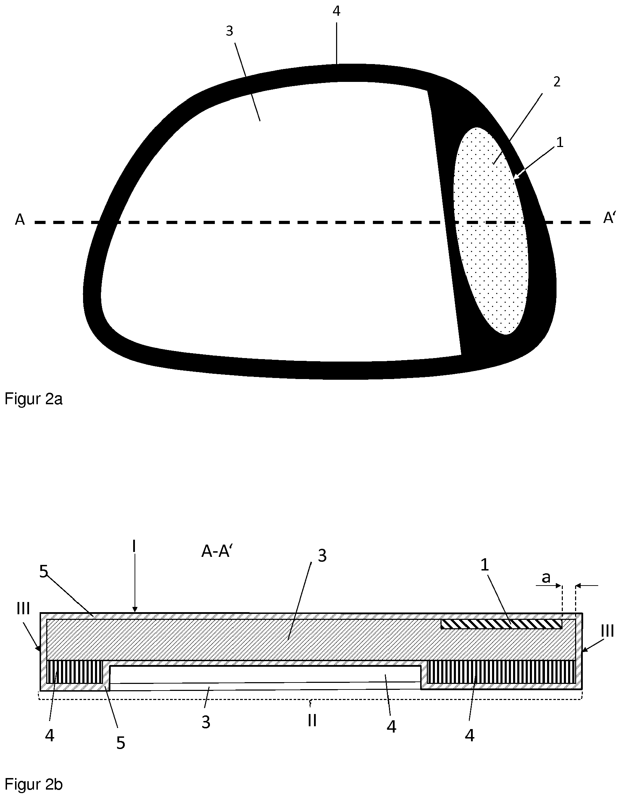

Figur 2a zeigt eine schematische Aufsicht auf eine erfindungsgemäße Kunststoff-Fahrzeugscheibe. Oft enthalten Fahrzeugscheiben im Bereich des Scheibenrandes außerhalb des Sichtfelds eine dunkel einfärbte, opake Komponente auf einer transparenten Komponente. Im Bereich der opaken Komponente kann die Scheibe für den Betrachter unsichtbar mit der Fahrzeugkarosserie verbunden werden. Dieser dunkle Bereich wird im erfindungsgemäßen Beispiel durch ein schwarzes Trägerteil 4 aus einem PC/ABS-Gemisch mit einer Dicke von 2,5 mm gebildet. Bei dieser Dicke verleiht das Trägerteil 4 der Fahrzeugscheibe die nötige Steifigkeit. Auf diesem Trägerteil 4 ist ein transparentes Deckteil 3 aus Polycarbonat mit einer Dicke von 4 mm angebracht. Bei dieser Dicke ist eine ausreichende Schlagzähigkeit gegeben, die bei Anwendung als Fahrzeugverglasung erforderlich ist. Das transparente Deckteil 3 kann getönt sein, wie dies zum Beispiel im Bereich der Privacy-Verglasung erforderlich ist. Auf dem polymeren transparenten Deckteil 3 ist eine polymere Folie 1 mit dekorativem Aufdruck 2 angeordnet. Wie aus Figur 2b ersichtlich, ist die polymere Folie 1 in das polymere Deckteil 3 eingebettet und nur oberhalb des Trägerteils 4 angebracht, um einen guten Kontrast des dekorativen Aufdrucks 2 vor dem opak ausgeführten Trägerteil 4 zu erzielen. Ein Randbereich mit einer Breite a von 0,1 cm ist frei von polymerer Folie 1, um eine besonders gute Randversiegelung zu erzielen. Über der polymeren Folie 1 und dem transparenten Deckteil 3 an der ersten freiliegenden Fläche I ist eine Schutzschicht 5 enthaltend einen Polysiloxan-Lack angeordnet. Dieser Lack schützt die polymere Folie 1 und den dekorativen Aufdruck 2 vor Abrieb, Witterung und Beschädigung. Durch die Beschichtung des polymeren Deckteils 3 mit einem Polysiloxan-Hardcoat können sogar die sehr hohen Anforderungen, welche üblicherweise nur an Sicherheitsverglasung gestellt werden (Scheiben aus starrem Kunststoff, ECE R43 Anhang 14, Klasse /M), erfüllt werden. Im gezeigten Beispiel ist der Lack auf allen freiliegenden Flächen I, II und III der Fahrzeugscheibe angebracht, um die Kratzfestigkeit der Scheibe auf den ersten und zweiten freiliegenden Flächen zu verbessern und auch die freiliegenden Seitenflächen III der Fahrzeugscheibe zu schützen.

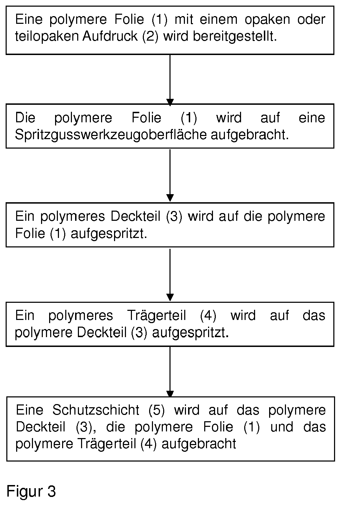

Figur 3 zeigt ein Fließschema des erfindungsgemäßen Verfahrens zur Herstellung eines erfindungsgemäßen Kunststoff-Fahrzeuganbauteils. In einem ersten Verfahrensschritt wird eine polymere Folie 1 mit einem bei einer Temperatur von 320°C zersetzungsstabilen, opaken oder teilopaken Aufdruck 2 versehen. Der Aufdruck 2 wird bevorzugt über ein Siebdruck- oder Ink-Jetdruckverfahren aufgetragen. Die polymere Folie 1 wird anschließend in ein Spritzgusswerkzeug eingelegt und mit einem transparenten polymeren Deckteil 4 hinterspritzt (dem verflüssigten polymeren Material des polymeren Deckteils). In einem abschließenden Schritt wird ein polymeres Trägerteil 4 auf die polymere Folie 1 und das polymere Deckteil 3 aufgespritzt. Nach dem Aushärten des polymeren Deckteils 3 und des polymeren Trägerteils 4 wird noch eine Schutzschicht 5 (Hardcoat) zur Verbesserung der mechanischen und chemischen Beständigkeit aufgetragen. Der Hardcoat kann über Flut-, Sprüh- oder Tauchverfahren aufgetragen werden. Die Schutzschicht 5 wird auf der ersten freiliegenden Fläche I, d.h. auf dem polymeren Deckteil 3 und der polymeren Folie 1 und auf der zweiten freiliegenden Fläche II, d.h. mindestens auf dem polymeren Trägerteil 4 aufgebracht. Bei Beschichtung mit Polysiloxan-Hardcoats können sogar die sehr hohen Anforderungen, welche üblicherweise nur an Sicherheitsverglasung gestellt werden (Scheiben aus starrem Kunststoff, ECE R43 Anhang 14, Klasse /M), erfüllt werden.

### Bezugszeichenliste:

- (1): polymere Folie
- (2): Aufdruck
- (3): polymeres Deckteil
- (4): polymeres Trägerteil
- (5): Schutzschicht
- (a): Breite des Randbereichs ohne polymere Folie
- (I): erste freiliegende Fläche des Kunststoff-Fahrzeuganbauteils
- (II): zweite freiliegende Fläche des Kunststoff-Fahrzeuganbauteils
- (III): freiliegende Seitenflächen des Kunststoff-Fahrzeuganbauteils

## Patentansprüche

1. Verfahren zur Herstellung eines Kunststoff-Fahrzeuganbauteils, wobei
a. eine polymere Folie (1), die einen opaken oder teilopaken Aufdruck (2) oder eine Farbpigmentierung aufweist, in ein Spritzgusswerkzeug eingelegt wird,
b. die polymere Folie (1) mit einem optisch transparenten polymeren Deckteil (3) hinterspritzt wird, wobei die polymere Folie (1) in das polymere Deckteil (3) eingebettet wird und die polymere Folie (1) und das polymere Deckteil (3) gemeinsam eine freiliegende Fläche (I) bilden, wobei sich die polymere Folie (1) nur über einen Teilbereich der freiliegenden Fläche (I) erstreckt, sodass ein Randbereich frei von der polymeren Folie (1) bleibt,
c. ein polymeres Trägerteil (4) zumindest auf einen Teil der Oberfläche des polymeren Deckteils (3), die von der polymeren Folie (1) abgewandt ist, direkt aufgespritzt wird und
d. eine Schutzschicht (5) zumindest auf die polymere Folie (1) aufgebracht wird.

2. Verfahren nach Anspruch 1, wobei die Schutzschicht (5) auf allen freiliegenden Flächen (I, II, III) des Kunststoff-Fahrzeuganbauteils angebracht wird.

3. Verfahren nach Anspruch 1 oder 2, wobei das polymere Trägerteil (4) opak ausgebildet wird.

4. Verfahren nach einem der Ansprüche 1 bis 3, wobei das polymere Deckteil (3) mit einer Dicke von 1 mm bis 10 mm, bevorzugt 2 mm bis 5 mm spritzgegossen wird.

5. Verfahren nach einem der Ansprüche 1 bis 4, wobei das polymere Trägerteil (4) mit einer Dicke von 0,5 mm bis 10 mm, bevorzugt 1 mm bis 5 mm spritzgegossen wird.

6. Verfahren nach einem der Ansprüche 1 bis 5, wobei das polymere Deckteil (3) Polycarbonate (PC), Polymethylmethacrylat (PMMA), Styrol-Acrylnitril (SAN), Polyethylenterephthalat (PET) und/oder Copolymere oder Gemische davon enthält.

7. Verfahren nach einem der Ansprüche 1 bis 6, wobei das polymere Trägerteil (4) Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol - Polycarbonat (ABS/PC), PET/PC, PBT/PC und/oder Copolymere oder Gemische davon enthält.

8. Verfahren nach einem der Ansprüche 1 bis 7, wobei die Schutzschicht (5) thermisch- oder UV-härtende Lacke, bevorzugt Polysiloxane, Polyacrylate, Polymethacrylate und/oder Gemische oder Copolymere davon enthält.

9. Verfahren nach einem der Ansprüche 1 bis 8, wobei die polymere Folie (1) Polycarbonate (PC), Polymethylmethacrylat (PMMA), Polyethylenterephthalat (PET), Polybutylenterephthalat (PBT), Polycarbonat-Polybutylenterephthalat (PBT/PC), Styrol-Acrylnitril (SAN) und/oder Copolymere oder Gemische davon enthält.

10. Verfahren nach einem der Ansprüche 1 bis 9, wobei die polymere Folie (1) eine Dicke von 0,1 mm bis 3 mm, bevorzugt 0,12 mm bis 0,5 mm aufweist.

11. Verfahren nach einem der Ansprüche 1 bis 10, wobei die polymere Folie (1) vorgeformt, bevorzugt thermisch vorgeformt wird.

12. Verfahren nach einem der Ansprüche 1 bis 11, wobei die polymere Folie (1) sich über einen Bereich von 3% bis 30%, bevorzugt 5% bis 15% der gesamten Fläche des polymeren Deckteils (3) erstreckt.

13. Verfahren nach einem der Ansprüche 1 bis 12, wobei die polymere Folie (1) mehrere einzelne polymere Folien (1) umfasst, die sich jeweils über einen Teilbereich der gesamten Fläche des polymeren Deckteils (3) erstrecken.

14. Kunststoff-Fahrzeuganbauteil mindestens umfassend:
a. eine polymere Folie (1), die einen opaken oder teilopaken Aufdruck (2) oder eine Farbpigmentierung aufweist, wobei die polymere Folie (1) mit einem optisch transparenten polymeren Deckteil (3) hinterspritzt ist, wobei die polymere Folie (1) in das polymere Deckteil (3) eingebettet ist und die polymere Folie (1) und das polymere Deckteil (3) gemeinsam eine freiliegende Fläche (I) bilden, wobei sich die polymere Folie (1) nur über einen Teilbereich der freiliegenden Fläche (I) erstreckt, sodass ein Randbereich frei von der polymeren Folie (1) bleibt,
b. ein opakes polymeres Trägerteil (4), das zumindest auf einem Teil der Oberfläche des polymeren Deckteils (3), die von der polymeren Folie (1) abgewandt ist, direkt aufgespritzt ist und
c. eine Schutzschicht (5), die mindestens auf der polymeren Folie (1) angebracht ist.

15. Kunststoff-Fahrzeuganbauteil nach Anspruch 11 oder 12, wobei der Aufdruck (2) organische Pigmente oder anorganische Pigmente, bevorzugt Urethan-Acrylat Polymere, Kohlenstoff, Azofarbstoffe oder polycyclische Verbindungen, Titandioxid, Ruß, Zinnober, Bismut- (Bismutvanadat), Spinellpigmente, Blei-, Quecksilber-, Zirkon-, Eisen-, Cadmium-, Kupfer-, Kobalt-, Nickel-, Chrompigmente; Aluminiumsilikate, Ultramarin enthält.

16. Verwendung des Kunststoff-Fahrzeuganbauteils nach einem der Ansprüche 14 bis 15 als Außenanbauteil für Fahrzeuge, bevorzugt als Fahrzeugscheibe oder Säulenabdeckung.

## Claims

1. Method for producing a plastic vehicle attachment part, wherein
a. a polymeric film (1) that has an opaque or semi-opaque imprint (2) or a color pigmentation is laid in an injection mold,
b. the polymeric film (1) is back injected with an optically transparent polymeric covering part (3), wherein the polymeric film (1) is embedded in the polymeric covering part and the polymeric film (1) and the polymeric covering part (3) form together an exposed surface (I), wherein the polymeric film (1) extends only over a subregion of the exposed surface (I), such that an edge region remains free of the polymeric film (1),
c. a polymeric carrier part (4) is sprayed directly on at least on a part of the surface of the polymeric covering part (3) that faces away from the polymeric film (1), and
d. a protective layer (5) is applied at least on the polymeric film (1).

2. Method according to claim 1, wherein the protective layer (5) is applied on all exposed surfaces (I, II, III) of the plastic vehicle attachment part.

3. Method according to claim 1 or 2, wherein the polymeric carrier part (4) is implemented opaque.

4. Method according to one of claims 1 through 3, wherein the polymeric covering part (3) is injection molded in a thickness from 1 mm to 10 mm, preferably 2 mm to 5 mm.

5. Method according to one of claims 1 through 4, wherein the polymeric carrier part (4) is injection molded in a thickness from 0.5 mm to 10 mm, preferably 1 mm to 5 mm.

6. Method according to one of claims 1 through 5, wherein the polymeric covering part (3) contains polycarbonates (PC), polymethyl methacrylate (PMMA), styrene acrylonitrile (SAN), polyethylene terephthalate (PET), and/or copolymers or mixtures thereof.

7. Method according to one of claims 1 through 6, wherein the polymeric carrier part (4) contains polyethylene (PE), polycarbonates (PC), polypropylene (PP), polystyrene, polybutadiene, polynitriles, polyesters, polyurethanes, polymethyl methacrylates, polyacrylates, polyamides, polyethylene terephthalate (PET), polybutylene terephthalate (PBT), preferably acrylonitrile butadiene styrene (ABS), acrylonitrile styrene acrylester (ASA), acrylonitrile butadiene styrene - polycarbonate (ABS/PC), PET/PC, PBT/PC, and/or copolymers or mixtures thereof.

8. Method according to one of claims 1 through 7, wherein the protective layer (5) contains thermal-cured or UV-cured varnishes, preferably polysiloxanes, polyacrylates, polymethacrylates, and/or mixtures or copolymers thereof.

9. Method according to one of claims 1 through 8, wherein the polymeric film (1) contains polycarbonates (PC), polymethyl methacrylate (PMMA), polyethylene terephthalate (PET), polybutylene terephthalate (PBT), polycarbonate - polybutylene terephthalate (PBT/PC), styrene acrylonitrile (SAN), and/or copolymers or mixtures thereof.

10. Method according to one of claims 1 through 9, wherein the polymeric film (1) has a thickness from 0.1 mm to 3 mm, preferably 0.12 mm to 0.5 mm.

11. Method according to one of claims 1 through 10, wherein the polymeric film (1) is preformed, preferably thermally preformed.

12. Method according to one of claims 1 through 11, wherein the polymeric film (1) extends over a region of 3% to 30%, preferably 5% to 15% of the entire surface of the polymeric covering part (3).

13. Method according to one of claims 1 through 12, wherein the polymeric film (1) comprises a plurality of individual polymeric films (1), which extend in each case over a subregion of the entire surface of the polymeric covering part (3).

14. Plastic vehicle attachment part at least comprising:
a. a polymeric film (1) that has an opaque or semi-opaque imprint (2) or a color pigmentation, wherein the polymeric film (1) is back injected with an optically transparent polymeric covering part (3), wherein the polymeric film (1) is embedded in the polymeric covering part and the polymeric film (1) and the polymeric covering part (3) form together an exposed surface (I), wherein the polymeric film (1) extends only over a subregion of the exposed surface (I), such that an edge region remains free of the polymeric film (1),
b. an opaque polymeric carrier part (4) that is sprayed directly at least onto a part of the surface of the polymeric covering part (3) that faces away from the polymeric film (1), and
c. a protective layer (5) that is applied at least on the polymeric film (1).

15. Plastic vehicle attachment part according to claim 11 or 12, wherein the imprint (2) contains organic pigments or inorganic pigments, preferably urethane-acrylate polymers, carbon, azo dyes or polycyclic compounds, titanium dioxide, carbon black, cinnabar, bismuth- (bismuth vanadate), spinel pigments, lead, mercury, zircon, iron, cadmium, copper, cobalt, nickel, chromium pigments; aluminosilicates, ultramarine.

16. Use of the plastic vehicle attachment part according to claim 14 to 15 as an exterior attachment part for vehicles, preferably as a vehicle window pane or a pillar covering.

## Revendications

1. Procédé de fabrication d'un composant en plastique pour véhicule, où
a. un film polymère (1) qui présente une impression (2) opaque ou partiellement opaque ou une pigmentation de couleur est insérée dans un outil de moulage par injection,
b. un élément de couverture (3) polymère visuellement transparent est injecté par l'arrière sur le film polymère (1), où le film polymère (1) est incorporé dans l'élément de couverture polymère (3) et le film polymère (1) et l'élément de couverture polymère (3) ensemble forment une surface exposée (I), où le film polymère (1) ne s'étend que sur une partie de la zone exposée (I), laissant une zone de bordure exempte du film polymère (1),
c. un élément de support polymère (4) est injecté directement sur au moins une partie de la surface de l'élément de couverture polymère (3), qui est détournée du film polymère (1), et
d. une couche protectrice (5) est appliquée au moins sur le film polymère (1).

2. Procédé selon la revendication 1, où la couche protectrice (5) est appliquée sur toutes les surfaces (I, II, III) du composant en plastique pour véhicule.

3. Procédé selon la revendication 1 ou 2, où l'élément de support polymère (4) est formé opaque.

4. Procédé selon l'une des revendications 1 à 3, où l'élément de couverture polymère (3) est moulé par injection avec une épaisseur de 1 mm à 10 mm, de préférence 2 mm à 5 mm.

5. Procédé selon l'une des revendications 1 à 4, où l'élément de support polymère (4) est moulé par injection avec une épaisseur de 0,5 mm à 10 mm, de préférence 1 mm à 5 mm.

6. Procédé selon l'une des revendications 1 à 5, où l'élément de couverture polymère (3) contient des polycarbonates (PC),du polyméthacrylate de méthyle (PMMA), du styrène acrylonitrile (SAN), du polytéréphtalate d'éthylène (PET) et/ou des copolymères ou des mélanges de ceux-ci.

7. Procédé selon l'une des revendications 1 à 6, où l'élément de support polymère (4) contient du polyéthylène (PE), des polycarbonates (PC), du polypropylène (PP), du polystyrène, du polybutadiène,
du polynitrile, du polyester, des polyuréthanes, des polyméthacrylates de méthyle, des polyacrylate, des polyamides, du polytéréphtalate d'éthylène (PET), du polytéréphtalate de butylène (PBT), de préférence de l'acrylonitrile-butadiène-styrène (ABS), de l'acrylonitrile-styrène-acrylate (ASA), de préférence de l'acrylonitrile-butadiène-styrène-polycarbonate (ABS/PC), du PET/PC, du PBT/PC et/ou des copolymères ou des mélanges de ceux-ci.

8. Procédé selon l'une des revendications 1 à 7, où la couche protectrice (5) contient des vernis thermodurcissables ou à durcissement UV, de préférence des polysiloxanes, des polyacrylates, des polyméthacrylates et/ou des mélanges ou des copolymères de ceux-ci.

9. Procédé selon l'une des revendications 1 à 8, où le film polymère (1) contient des polycarbonates (PC), du polyméthacrylate de méthyle (PMMA), du polytéréphtalate d'éthylène (PET), du polytéréphtalate de butylène (PBT), du polytéréphtalate de butylène-polycarbonate (PBT/PC), du styrène acrylonitrile (SAN) et/ou des copolymères ou des mélanges de ceux-ci.

10. Procédé selon l'une des revendications 1 à 9, où le film polymère (1) présente une épaisseur de 0,1 mm à 3 mm, de préférence de 0,12 mm à 0,5 mm.

11. Procédé selon l'une des revendications 1 à 10, où le film polymère (1) est préformé, de préférence préformé thermiquement.

12. Procédé selon l'une des revendications 1 à 11, où le film polymère (1) s'étend sur une zone qui comprend entre 3% et 30%, de préférence 5% à 15%, de la surface totale de l'élément de couverture polymère (3).

13. Procédé selon l'une des revendications 1 à 12, où le film polymère (1) comprend plusieurs films polymères individuels (1), dont chacun s'étend sur une zone partielle de la surface totale de l'élément de couverture polymère (3).

14. Composant en plastique pour véhicule comprenant au moins:
a. un film polymère (1) qui présente une impression (2) opaque ou partiellement opaque ou une pigmentation de couleur, où un élément de couverture (3) polymère visuellement transparent est injecté par l'arrière sur le film polymère (1), où le film polymère (1) est incorporé dans l'élément de couverture polymère (3) et le film polymère (1) et le l'élément de couverture polymère (3) ensemble forment une surface exposée (I), où le film polymère (1) ne s'étend que sur une partie de la surface exposée (I), laissant une zone de bordure exempte du film polymère (1),
b. un élément de support polymère (4) opaque qui est pulvérisée directement sur au moins une partie de la surface de l'élément couverture polymère (3), qui est détournée du film polymère (1), et
c. une couche protectrice (5) qui est appliquée au moins sur le film polymère (1).

15. Composant en plastique pour véhicule selon la revendication 11 ou 12, où l'impression (2) contient des pigments organiques ou des pigments inorganiques, de préférence des polymères acrylates d'uréthane, du carbone, des colorants azoïques ou des composés polycycliques, du dioxyde de titane, de la suie, du cinabre, du bismuth (du vanadate de bismuth), des pigments de spinelle, du plomb, du mercure, du zircon, du fer, du cadmium, du cuivre, du cobalt, du nickel, des pigments de chrome, des silicates d'aluminium, de l'ultramarine.

16. Utilisation du en plastique pour véhicule selon l'une des revendications 14 à 15, en tant que composant externe pour les véhicules, de préférence en tant que vitre de véhicule ou couverture de colonne.
